# EUROPEAN PATENT APPLICATION

(11) **EP 3 029 947 A1**
(43) Date of publication of application: **08.06.2016**
(21) Application number: 15275232.5
(22) Date of filing: 13.11.2015
(51) Int. Cl.: H04N 21/462, H04N 21/43, H04N 21/433, H04N 21/8547, H04N 21/44, H04N 21/434, H04N 21/472, H04N 5/76, H04N 21/4147

(54) **IMPROVEMENTS TO TELEVISION START OVER SERVICE METHOD AND SYSTEM**

(30) Priority: 01.12.2014 GB 201421304
(71) Applicant: Pace Plc, Bradford BD18 3LF (GB)
(72) Inventor: NOVI, Benjamin, 78160 Marly le Roi (FR)
(74) Representative: Wood, Graham

(57) **Abstract**

The invention relates to the improvements in the provision of a service which can be made available to a user of apparatus which allows the user to select and view and/or listen to television or radio programmes. The "start over" service allows the user to start watching and/or listening to the selected programme from the start of the programme even if the user selection of the particular programme is made once the programme has aLready started in real time. In one embodiment the service is provided as a service via an IP network. In accordance with the invention, data for the live provision of the selected programme is stored in memory means once the programme is selected and the data from the memory means is used to generate the programme for watching and/or listening instead of the data from the start over service, once the data for the continued and synchronised provision of the programme is available in the memory means.

## Description

The invention relates to the provision of a television service generated from received digital data and particularly, although not necessarily exclusively, to a new service deployed by Digital Television (DTV) operators that allows their customers to be able to achieve the playback of a live programme from its beginning, even when the programme may already have started at the time of the user selecting the programme to be viewed.

In accordance with certain services, when a user selects a TV channel in which the programme that they wanted to watch has already started the user can select to watch the programme from the start. This is implemented by providing such programmes, on demand in real-time, using IP multicasting which is performed in parallel with the live broadcast reception of the data via any of satellite, cable, terrestrial and/or over the top (OTT) transmission systems.

At present, in order to provide the known system, upon the viewer selecting a channel with a live broadcast programme P1, then that programme will also be available through the "Start Over" service. The set top box then checks for, and detects, that the programme is available in the "Start Over" service and offers the user the option to start watching the selected programme from the beginning. If desired, the viewer can then select to start watching the programme from its beginning via the "Start Over" service. The viewer can then watch the programme from its start to its end thanks to the "Start Over" service and then, when the programme is finished, can select to watch any of the live programming which is available in the current or other available and selectable TV channels, at that time.

However, the provision of the current system has several problems. One of these is that when the viewer watches the entirety of programme P1 using the "Start Over" (multicast) system this has an impact on the IP load on the Operator network. Furthermore, at the end of the playback, when the viewer returns to the live broadcast they will have potentially missed the beginning of the following programme, or they will stay on the "Start Over" service for the following programme and thereby further increase the impact on the IP network.

The aim of the present invention is to minimise the usage of the "Start Over" service and hence minimise the impact of the same on the overall service, whilst providing and maintaining the service facility to the user.

In accordance with a first aspect of the invention there is provided apparatus for the provision of a range of television and/or radio programmes, said apparatus including means for receiving and processing the data for the said programmes, user control means to select a particular programme from the range, a memory means, switching means and a display screen and/or speakers to allow the selected programme to be viewed and/or watched wherein, upon a user selection being made of a programme at a time after the selected programme has started, data for that programme is buffered in the memory means in parallel with the receipt of data from a service which allows the selected programme to be viewed and/or listened to from the start of the programme and, if the said service is initially used for the selected programme, the switching means allow a switch to subsequently be made to use the data from the memory means once the content required to be provided for the ongoing viewing and/or listening of the selected programme is available in the memory means.

In one embodiment the switch to use the data from the memory means occurs automatically upon the presence of the required data being detected.

In one embodiment the memory means is the Time Shift Buffer of the device (PVR) that usually provides Time Shifting functionality for the programme being watched.

In one embodiment, when playing data back from the internal Time Shift Buffer, if the user reaches the beginning (e.g. by rewinding) then, in one implementation, the device automatically reconnects to the "Start Over" service and requests playback in the user selected mode (e.g. rewinding X2), and, in another implementation, the device can propose to resume the playback at the beginning of the programme (e.g. if trick mode is not available from the "Start Over" service).

Typically, in either of these scenarios, the device continues to fill the Time Shift Buffer with received data in a sequential manner.

In a further aspect of the invention there is provided a method for the provision of a range of television and/or radio programmes, said method including the steps of; receiving and processing the data for the said programmes, allowing the user to select to view and/or listen to a particular programme, and providing a service which, if the programme is selected after it has started, allows the programme to be available to be viewed and/or listened to from the start and wherein data for the selected programme from the time of the user selection being made is stored in a memory means in parallel with the receipt of data for the selected programme from the said service, commencing the viewing and/or listening of the programme from the start using the data from the said service and switching means are provided to allow a switch to subsequently be made to use the data from the memory means rather than from the said service, once the content required to be provided for the user's ongoing viewing and/or listening of the selected programme is available in the memory means.

Typically, synchronisation is the means by which the device detects the moment the playback can switch from the Start Over service to the internal Time Shift Buffer. If the Start Over service delivered programme is an exact copy of the broadcast delivered version of the programme then finding a matching point between the two sets of data can be done by comparing a starting segment of the Time Shift Buffer with the incoming Start Over service until a match is made.

In another embodiment, if the Start Over service version of the programme has been re-encoded to reduce the cost of delivering it across an IP network, additional signalling will be required in order to facilitate synchronization.

In one embodiment of the invention, the synchronization is based on the start time of the programme and the switch occurs after a duration of time that matches the detected duration of the "missed" portion from the beginning of the programme. This implementation does not require the addition of further metadata into the streams and is therefore simpler to add to an existing start-over enabled service.

In another embodiment, to provide a more accurate synchronization, the detection of the start time of the live programme can rely on the same mechanism that defines the beginning of the programme as stored on a server. For example, if the Start Over is implemented by triggering a programme recording upon the detection of any of the DVB SI (Service Information), EIT (Event Information Table) p/f (programme present/following indication), for example, and therefore rather than relying on the start time in metadata, the device can use this mechanism to determine the "start" of a programme. In order to do so, the device shall monitor EIT p/f for all DVB services (at least the ones whose current programme is available for selection of the Start Over service) to detect and maintain the real start time of any programme which is also available from the Start Over service.

In one embodiment, in order to minimise latencies and jitter in the multiplexing of the SI information, the decision to switch from the data provided from the Start Over service to the data from the Time Shift Buffer should include an additional delay of at least 1 second.

In a further, and preferred, embodiment of the invention, the synchronization of the Start Over service and the internal Time Shift Buffer relies on markers inserted into the data streams for synchronization.

In this embodiment, the Start Over service provides a list of "Points of Synchronization" in dedicated metadata which consists of the "Start Over Sync Marker" identifying a position of the programme in the multicast stream and a "Broadcast Marker" matching the equivalent position of the programme in the broadcast live stream.

Typically, the markers need not be dedicated specifically for the synchronization task and existing elements within streams can be used (e.g. PCR, programme clock reference). Preferably the "Broadcast Marker" shall be chosen so that it can be chronologically sorted, such as a Time Stamp or an ordered number.

Typically the device stores the "Broadcast Markers" as well as the broadcast streams when filling the Time Shift Buffer, so creating a table of the markers and their corresponding locations within the memory means, Broadcaster Markers Table.

In this embodiment, when the device starts playing the content from the Start Over service the device will obtain the "Points of Synchronization" information from the Start Over service and compare the Points of Synchronization table with the Broadcast Markers Table to identify, typically chronologically, the earliest occurrence of a match. This is the "TSB Synchro Position" and identifies the Start-Over Sync Marker and Broadcast Marker pair. Whilst the Start Over stream is being received, it is monitored for the specific Start Over Sync marker associated with the TSB Synchro Position and, once received, the device stops the Start Over service and instead generates the programme from the data held in the memory means, using the Broadcast Markers Table to identify the specific position, the TSB index, in the memory means.

In a further embodiment the device stores the TSB synchro position and the point of Synchronization so that a transition from the Time Shift Buffer back to the Start Over stream is possible if, for example, the user selects a rewind function. This is particularly useful if the Start Over stream is also locally stored. In an alternative embodiment, where the Points of Synchronisation metadata is not available, the Broadcast Marker is predetermined and the Broadcast Marker Table is created as before.

The Start Over Sync markers are detected as the Start Over stream of data is received and each Start Over Sync marker contains information associating it with a corresponding Broadcast Marker. As each Start Over Sync marker is received its associated Broadcast Marker data is compared against the First Broadcast Marker from the Broadcast Marker Table. Once matched, the Start Over stream is stopped and the receiver is switched to receive and use the data from the Time Shift Buffer instead and from the location therein which is identified in the Broadcast Marker Table.

Specific embodiments of the invention are now described with reference to the accompanying drawings: wherein
Figures 1a-d illustrates the steps of a conventional service of the "Start Over" form to which the invention relates;
Figures 2a - e illustrates an embodiment of the system in accordance with the invention;
Figure 3 illustrates an optional feature for use in one embodiment with the system in accordance with the invention;
Figures 4a - b illustrate a further embodiment of the invention;
Figure 5 illustrates in schematic manner the synchronisation mechanism of one embodiment of the invention; and
Figure 6 illustrates a further embodiment of the synchronisation mechanism of the invention.

The invention relates to the provision of a service which can be made available to a user of apparatus which allows the user to select and view and/or listen to television or radio programmes, from the start of the programme, even though the user selection of the particular programme may have been made once the programme has already started in real time. This service therefore allows the user to be able to view and/or listen to the selected programme from the start to the finish rather than missing the start of the programme if the selection of the programme is made late, which is what would occur if the service was not available. This form of service is typically known as a "start over" service and is referred to as such heronin. In one embodiment the service is provided as a service via an IP network.

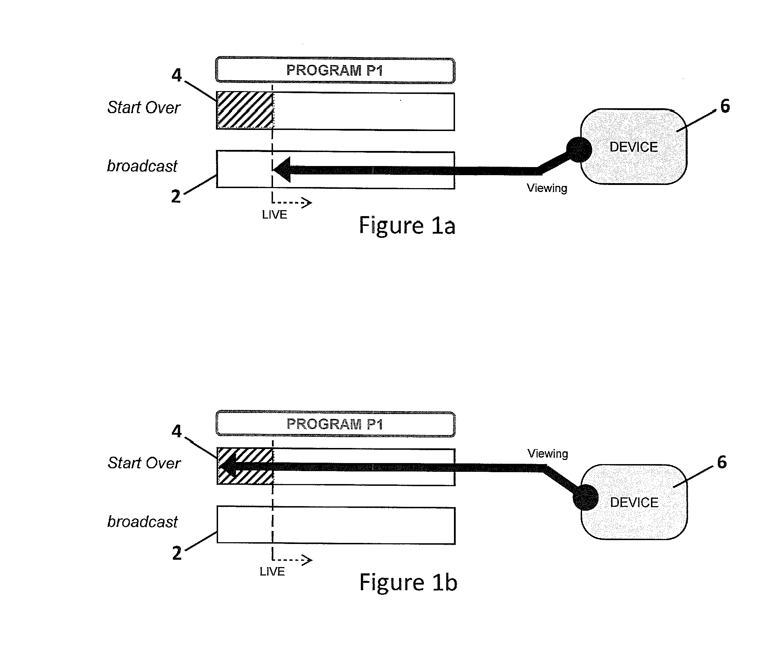

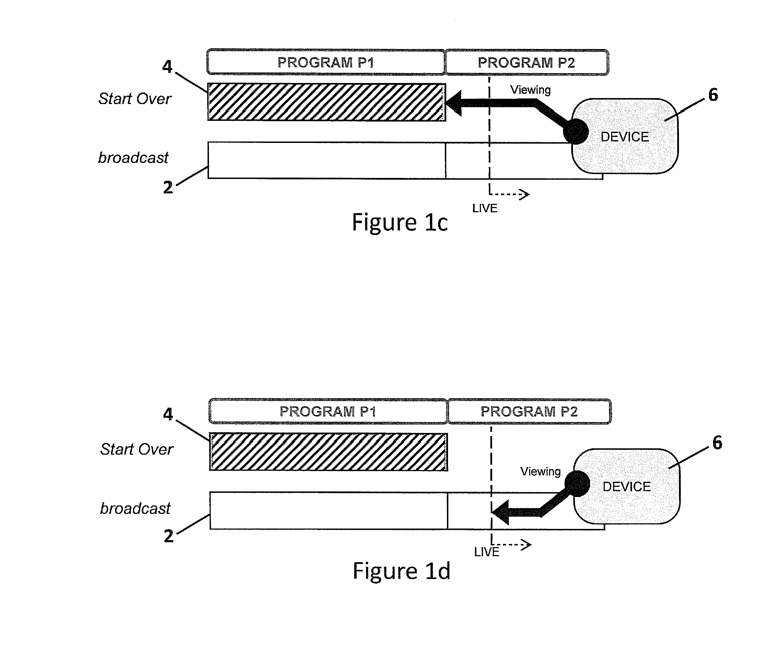

Figures 1a-d illustrate a conventional start over system and it is shown how the user selects a television channel which has a live broadcast programme, P1, that has already started but which programme is also available through the "Start Over" service. This means that the data receiver apparatus, which in one form can be a set top box, upon detecting that the programme is available in the "Start Over" service, offers the user the option to commence viewing the programme which they have selected from the start of the programme. If the user selects that option, the user starts watching the programme from its beginning via the "Start Over" service as illustrated in Figures 1a and b and the user watches the programme to its end on the Start Over service as shown in Figure 1c and then resumes watching live programme from broadcast data in the same or other channels as illustrated in Figure 1d.

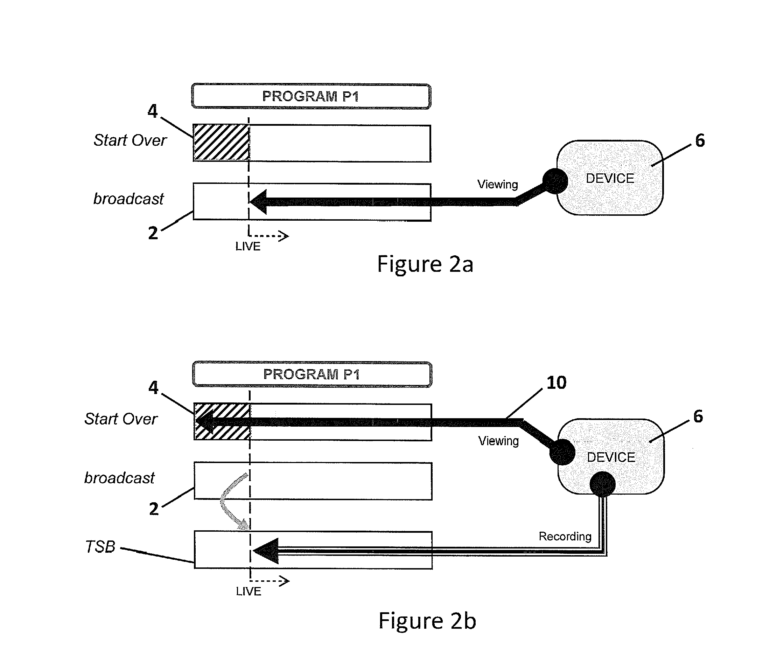

In accordance with the invention as illustrated in Figures 2a-b, upon the user selection of the programme and then selecting to use the Start Over service, then, in parallel with the provision of the start over service, the data receiver starts to fill a memory means, such as an internal Time Shift Buffer (TSB) with the data from the live content broadcast on the TV channel for the selected programme. The storing of the data in the memory means commences from the time of the user selecting the programme and selecting to use the start over service to view the programme.

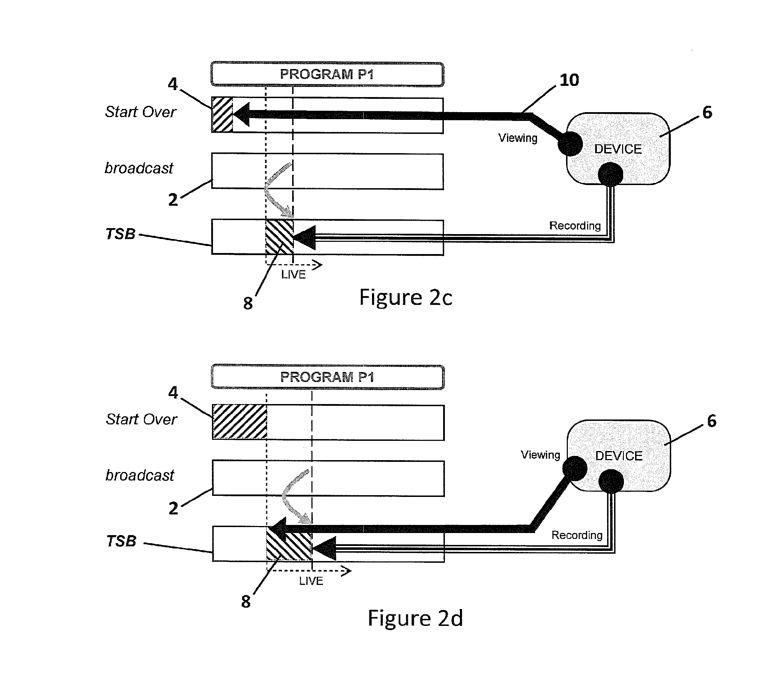

While the programme content from the start of the programme that the user is watching is not yet available in the internal Time Shift Buffer (TSB), the user watches the programme via the "Start Over" service whilst the receiver keeps filling the internal Time Shift Buffer (TSB) with the data for the live content broadcast on the TV channel as shown in Figure 2c.

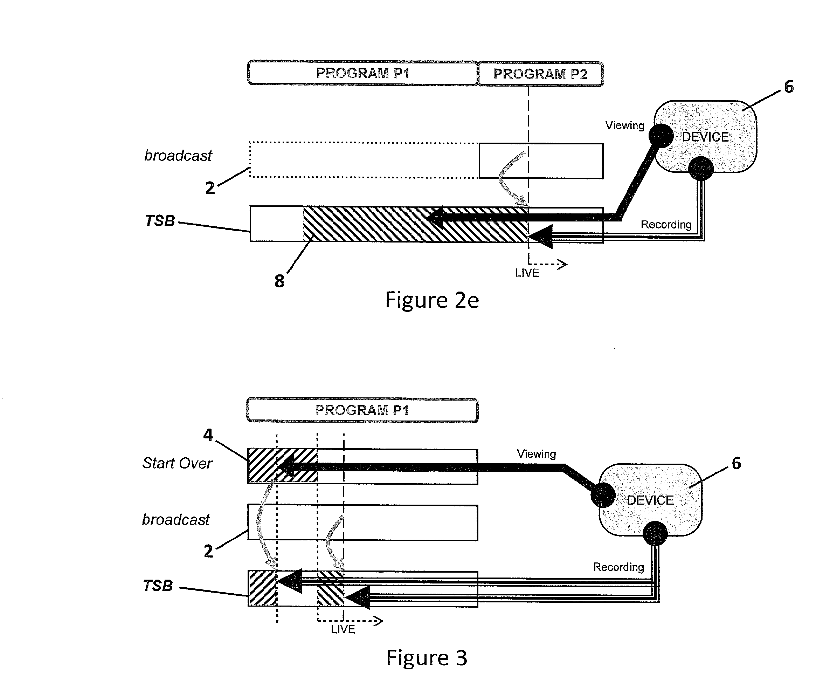

As soon as the data for the content of the programme that the user is watching is available in the internal Time Shift Buffer (TSB), the apparatus, preferably automatically, switches the source of the data for the ongoing playback of the selected programme to be the memory means in the form of the internal Time Shift Buffer and at which point the connection to the "Start Over" service is closed. In turn, this means that the relatively high demand on the IP network which is created by the provision of the start over service is therefore removed, as illustrated in Figure 2d. The user can then continue to watch the said programme and subsequent programmes on the same TV channel using the data from the Time Shift Buffer memory means (using regular Time Shift functionality) as illustrated in Figure 2e.

Typically the use of the data from the Time Shift Buffer will be deleted automatically as soon as the user selects a programme from another channel or, optionally, goes to live, or in accordance with any other Time Shift Buffer deletion policy defined by the Time Shift function of the device, if such a function is provided (i.e. the Time Shift Buffer is not solely dedicated to limit "Start Over" usage).

In one embodiment, the device, besides filling the Time Shift Buffer with the broadcast data content, also fills the Time Shift Buffer with the content received from the Start Over service to fill the gap between the live time of the programme and the start of the programme. Thus, the data for the entire selected programme can be advantageously stored in the Time Shift Buffer as illustrated in Figure 3.

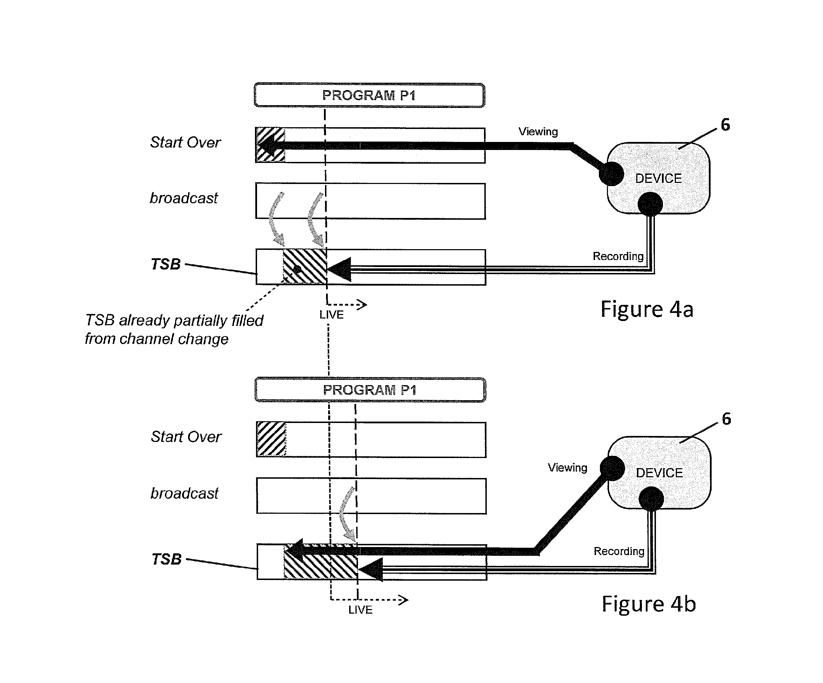

In one embodiment, it is common for the Time Shift Buffer to start filling upon the event of a channel change, in anticipation of the user requesting to rewind the live broadcast. In this scenario, if the data for the beginning of the selected programme is already in the internal Time Shift Buffer, the device shall resume to the beginning of the programme by playing it from the Time Shift Buffer or, if the Time Shift Buffer has already been filled with content of the broadcast programme but without the beginning, the device shall allow the resume to the beginning of the programme by the "Start Over" service as illustrated in Figure 4a.

Typically, the device shall then keep on filling the Time Shift Buffer with the live broadcast content and switch from the Start Over to the Time Shift Buffer as soon as it contains the content to be played as shown in Figure 4b.

Figure 3 illustrates the first switch as described above in which the start of the programme is generated from data received from the second source 4 and Figure 4b illustrates a manner in which the broadcast data receiver 6 switches to use the data held in the memory means TSB, as soon as possible. It should be appreciated that in accordance with the invention, the transfer of use of the data from the second source 4 to the data from the memory means TSB, has no impact on the generation of the programme to the viewer.

There is a need to be able to synchronise the transfer to allow the same to have no significant impact on the service provided to the viewer. There is a need to be able to find a matching point between the data used at that time from the second source and the start point of the data which becomes available from the memory means TSB. This can be achieved by comparing a starting segment of the data held in the memory means TSB with the segments of the data from the second source 4 until a match is made. While this is possible to do if the copy of the programme being stored in the memory means TSB is an identical copy to that provided from the second source 4, it is more likely that the programme data version from the second source 4, will have been re-encoded to reduce the cost of delivering it across the second source network which can be any of an IP network, VOD, or catch-up TV network structure.

In order to overcome this problem, in one embodiment, the synchronization can be based on the start time of the programme and the switch occurs automatically after a duration of time that matches the duration of the part of the programme which has been missed between the start time and the time at which the user selected to view the programme. In order to provide an accurate synchronization, the detection of the start time of the programme should rely on the same mechanism that defines the beginning of the programme as stored on the second source server. For example, if the second source is implemented by triggering a programme recording on the detection of the DVB SI (Service Information), EIT (Event Information Table), p/f (Programme Present)/ following indication), for example, the device should also use this mechanism to determine the start of the programme and, in order to do so, the device can monitor the EIT for all DVB services to detect and maintain the real start time of any programme which is also available from the second source 4.

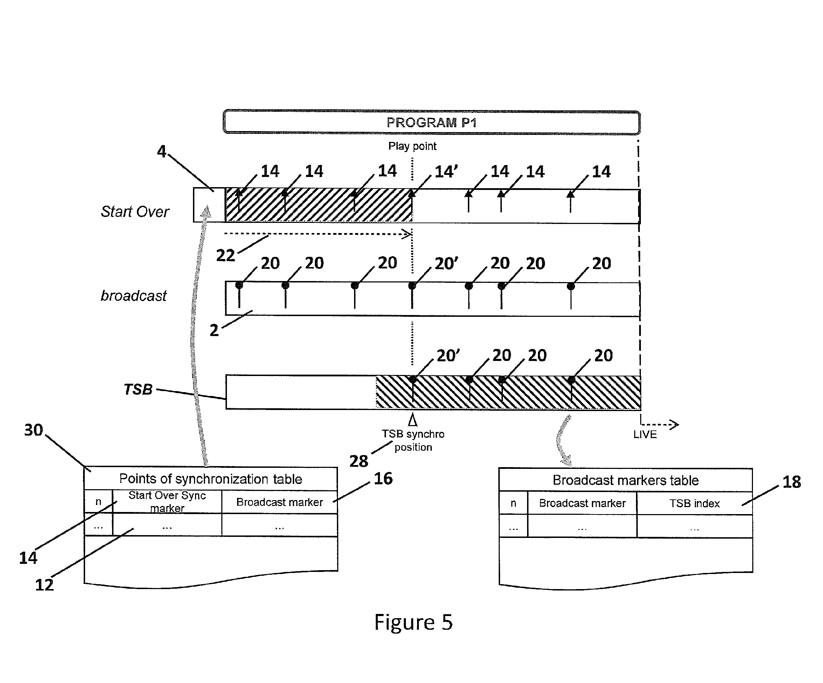

Referring now to Figure 5, there is illustrated a possible synchronization method in accordance with the invention in which markers are provided into the streams for synchronization. In accordance with this arrangement, the system provides a list of points of synchronization in dedicated metadata which is provided from the second source 4. The points of synchronization are identified in a table 12 carried by the data and include Start Over Sync marker 14 identifying the position of the programme in the multicast stream of the second source and a Broadcast Marker 16 which matches the equivalent position of the selected programme in the first source 2. The markers may be provided specifically for this purpose or existing markers may be used and the Broadcast Markers are typically chosen so that it can be chronologically sorted, such as using a time start code. The Broadcast Markers are typically stored in the broadcast data receiver when the broadcast data receiver adds data received from the first source into the memory means TSB so creating a table with the markers and their corresponding locations within the memory means using the Broadcast Markers Table 18.

When the broadcast data receiver receives a selection to watch a particular programme from a viewer and the viewer then selects to use the service available to start watching the programme from the start, then the broadcast data receiver will start to play the content, initially from the second source 4. The broadcast data receiver therefore also obtains points of synchronization information from the second source and compares the Points of Synchronization Table with the Broadcast Marker Table to be able to identify the chronologically earliest match between data received from the first and second sources. This is then identified as the TSB synchro position 28 and therefore indicates the Start Over Sync marker 14' and the Broadcast Marker 20' which match and therefore indicate the change over time between the data being used for the programme from the second data source to the broadcast data received from the memory means which has been provided by the first source. It will be seen that a plurality of Start Over Sync markers 14 and Broadcast Markers 20 are provided at timed intervals so that any of these markers can be matched for the analysis of the Points of Synchronization Table and the Broadcast Marker Table.

Thus, in the ongoing generation of a programme and using data from the second source 4, as indicated by arrow 22, so the broadcast data receiver will monitor for the specific Start Over Sync marker which is associated with the TSB synchro position 28 and once received, the broadcast data receiver stops the use of data from the second source 4 and switches to generate the remainder of the programme using data from the memory means TSB using the Broadcast Marker Table 18 to identify the specific position in the memory from which the data is to be retrieved.

The Points of Synchronisation Table could be based on an MPEG DASH (ISO/IEC 23009-1) Media Presentation Description, by further including information identifying the synchronising Broadcast Marker within each segment.

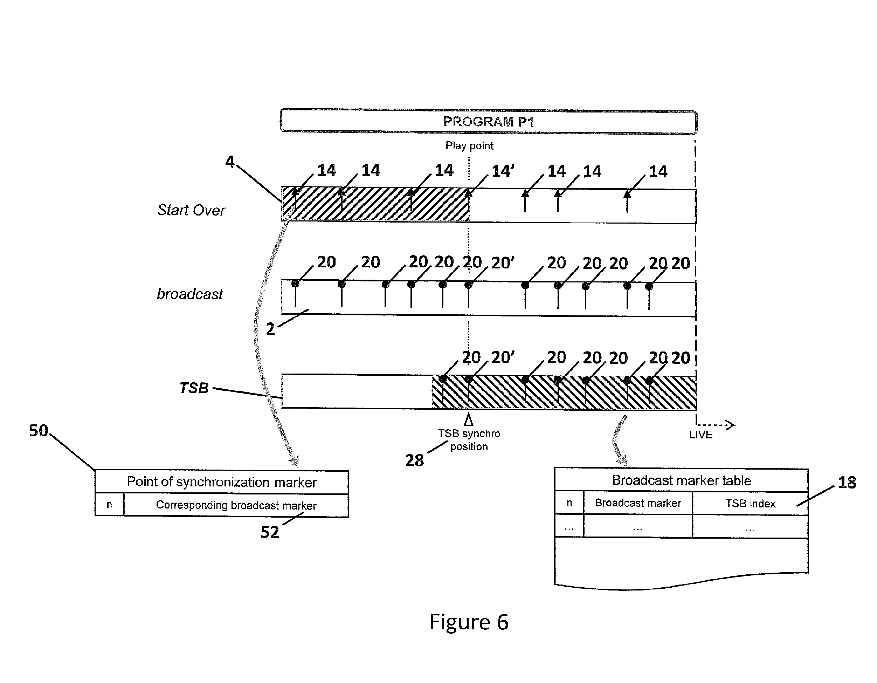

If the Points of Synchronization Table is not available from the second source, see Figure 6, then the second source can indicate synchronisation points within the stream itself. To identify these points, the Start-Over Sync marker would need to be predetermined. The broadcast data receiver would use these predetermined Start- Over Sync markers to locate the Start Over Sync markers and retrieve the additional information indicating the corresponding Broadcast Marker, from within the Start Over stream 50. Furthermore the device can make use of a predetermined identifier to locate the broadcast markers 20 and record their position within the TSB, in the Broadcast Marker Table 18. As each Start Over Sync marker is received, the associated Broadcast Maker information 52 is compared against the Broadcast Marker Table to determine whether a match has occurred. Once a match has been found the receiver can then switch from viewing the programme from the Start Over service to viewing the programme from the TSB.

The invention therefore allows the user to be able to view and/or listen to the selected programme from the start via the start over service whilst, at the same time, allowing the provision of the start over system, and the demands on the IP network or other means of providing the start over service, to be minimised by switching to the use of stored data from the "live" broadcast to provide the programme, as and when it is possible to do so, in a synchronised manner.

## Claims

1. Apparatus for the provision of a range of television and/or radio programmes, said apparatus including means for receiving and processing the data for the said programmes, user control means to select a particular programme from the range, a memory means, switching means and a display screen and/or speakers to allow the selected programme to be viewed and/or watched wherein, upon a user selection being made of a programme at a time after the selected programme has started, data for that programme is buffered in the memory means in parallel with the receipt of data from a service which allows the selected programme to be viewed and/or listened to from the start of the programme and, if the said service is initially used for the selected programme, the switching means allow a switch to subsequently be made to use the data from the memory means once the content required to be provided for the ongoing viewing and/or listening of the selected programme is available in the memory means.

2. Apparatus according to claim 1 wherein the switch to use the data from the memory means occurs automatically upon the presence of the required data being detected in the memory means.

3. Apparatus according to claim 1 wherein the memory means is the Time Shift Buffer of the device (PVR) that also provides Time Shifting functionality for the selected programme.

4. Apparatus according to claim 3 wherein when playing data back from the Time Shift Buffer, if the user rewinds to the start of the selected programme the apparatus reconnects to the said service and requests playback in the user selected mode (e.g. rewinding X2).

5. Apparatus according to claim 4 wherein the system continues to fill the Time Shift Buffer with received data for the selected programme in a sequential manner.

6. A method for the provision of a range of television and/or radio programmes, said method including the steps of; receiving and processing the data for the said programmes, allowing the user to select to view and/or listen to a particular programme, and providing a service which, if the programme is selected after it has started, allows the programme to be available to be viewed and/or listened to from the start and wherein data for the selected programme from the time of the user selection being made is stored in a memory means in parallel with the receipt of data for the selected programme from the said service, commencing the viewing and/or listening of the programme from the start using the data from the said service and switching means are provided to allow a switch to subsequently be made to use the data from the memory means rather than from the said service, once the content required to be provided for the user's ongoing viewing and/or listening of the selected programme is available in the memory means.

7. A method according to claim 6 wherein synchronisation is used to detect the point at which the switch from using data from the said service to data from the memory means occurs.

8. A method according to claim 7 wherein if the selected programme provided by the said service is an exact copy of the version of the selected programme for which the data is stored in the memory means, a matching point between the two sets of data is identified by comparing a starting segment of the programme from the memory means with the data for the selected programme provided by the said service and repeating this until a match is identified.

9. A method according to claim 7 wherein if the service version of the programme has been re-encoded to reduce the cost of delivering it across an IP network, additional signalling is required in order to facilitate synchronization.

10. A method according to claim 7 wherein synchronization is based on the start time of the selected programme and the switch occurs after a duration of time that matches the duration of the missed portion of the programme which is from the start time of the programme to the time at which the selection to view the programme was made.

11. A method according to claim 7 wherein synchronisation is based on the detection of any of the DVB SI (Service Information), EIT (Event Information Table) p/f (programme present/following) indication to determine the start time of the programme.

12. A method according to claim 11 wherein the apparatus monitors EIT p/f for all DVB services with a current programme which is available for selection on the said service to detect and maintain the actual or real start time of any programme which is also available from the said service.

13. A method according to claim 1 wherein the decision to switch from the data provided by the said service to the data from the memory means is delayed by a predetermined period of time in order to minimise latencies and jitter in the multiplexing of the SI information.

14. A method according to claim 7 wherein the synchronization of the said service and the memory means relies on markers inserted into the data streams.

15. A method according to claim 14 wherein the said service provides a list of Points of Synchronization in dedicated metadata which includes a Start Over Sync Marker identifying a position of the programme in a multicast data stream and a Broadcast Marker matching the equivalent position of the programme in a broadcast live data stream.

16. A method according to claim 15 wherein the markers are existing elements within the said datastreams.

17. A method according to claim 15 wherein the Broadcast Marker is chosen so that it can be chronologically sorted, such as a Time Stamp or an ordered number.

18. A method according to claim 15 wherein the apparatus stores the Broadcast Markers as well as the broadcast data stream when filling the memory means so creating a table of the markers and their corresponding locations within the memory means.

19. A method according to claim 15 wherein when the device starts playing the content from the said service the apparatus obtains the Points of Synchronization information from the said service and compares the points of Synchronization table with the Broadcast Markers Table to identify the earliest occurrence of a match which is identified as the TSB Synchro position which identifies the Start-Over Sync Marker and Broadcast Marker pair..

20. A method according to claim 19 wherein the said service datastream is monitored as it is being received for the specific Start Over Sync marker associated with the TSB Synchro Position and, once received, the apparatus switches to generate the selected programme from the data held in the memory means by using the Broadcast Markers Table to identify the specific position in the memory means.

21. A method according to claim 19 wherein the device stores the TSB synchro position and the point of Synchronization so that a transition from the Time Shift Buffer back to the service data stream is possible if, for example, the user selects a rewind function.
